(19) Europäisches Patentamt
European Patent Office
Office européen des brevets

(11) **EP 2 045 951 A2**

(12) **EUROPEAN PATENT APPLICATION**

(43) Date of publication:
**08.04.2009 Bulletin 2009/15**

(51) Int Cl.:
**H04L 1/18** (2006.01)

(21) Application number: **08165691.0**

(22) Date of filing: **02.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: 02.10.2007 US 976839 P
02.10.2007 US 976808 P
31.10.2007 US 984132 P
31.10.2007 US 984162 P
03.12.2007 US 991809 P
03.12.2007 US 991812 P
21.09.2008 US 95570 P
12.09.2008 US 96636 P

(71) Applicant: **Infineon Technologies AG**
**85579 Neubiberg (DE)**

(72) Inventors:
• **Heise, Bernd**
**81825, München (DE)**
• **Schedelbeck, Gert**
**81669, München (DE)**
• **Schoppmeier, Dietmar**
**82008 Unterhaching (DE)**
• **Thyagarajan, Umashankar**
**81667, München (DE)**

(74) Representative: **Sticht, Andreas**
**Kraus & Weisert**
**Patent- und Rechtsanwälte**
**Thomas-Wimmer-Ring 15**
**80539 München (DE)**

(54) **Retransmission scheme for communication systems**

(57) One embodiment relates to a method of communicating data between a transmitter and receiver of a communication system. In this method, data is received at the receiver as a series of data units respectively associated with container numbers. The receiver identifies whether the received data includes an uncorrectable data unit. If an uncorrectable data unit is detected, the receiver identifies a container number associated with the data unit. The receiver transmits a request for retransmission of the data unit by sending information indicative of the container number associated with the uncorrectable data unit. Other methods and systems are also disclosed.

FIG. 7

EP 2 045 951 A2

**Description**

**FIELD OF DISCLOSURE**

The present invention relates generally to communication systems and more particularly to Digital Subscriber Line (DSL) and wireless communication systems.

**SUMMARY**

The following presents a simplified summary in order to provide a basic understanding of one or more aspects of the invention. This summary is not an extensive overview of the invention, and is neither intended to identify key or critical elements of the invention, nor to delineate the scope thereof. Rather, the primary purpose of the summary is to present some concepts of the invention in a simplified form as a prelude to the more detailed description that is presented later.

In an embodiment, a method as defined in claim 1 or claim 5 is provided. In another embodiment, a communication system as defined by claim 8 or 17 is provided. In another embodiment, a transmitter as defined by claim 10 is provided. The dependent claims define further embodiments. It is to be noted that features of these embodiments may be combined with each other unless specifically noted to the contrary. For example, the methods may be implemented in the communication systems.

One embodiment relates to a method of communicating data between a transmitter and receiver of a communication system. In this method, data is received at the receiver as a series of data units respectively associated with container numbers. The receiver identifies whether the received data includes an uncorrectable data unit. If an uncorrectable data unit is detected, the receiver identifies a container number associated with the data unit. The receiver transmits a request for retransmission of the data unit by sending information indicative of the container number associated with the uncorrectable data unit.

Another embodiment relates to a network stack having multiple network layers to facilitate exchange of data between a transmitter and a receiver. The transmitter includes a first network stack layer and a second network stack layer. A stream of data units are provided on the first network stack layer, where a data unit includes: a sequence identifier (SID), eligibility information indicating whether the data unit is suitable for retransmission, and payload data. The second network stack layer is adapted to receive the stream of data units from the first network stack layer and arrange the data units into one or more containers. A container includes a container identifier that identifies a series of data units in the container.

Other methods and systems are also disclosed.

The following description and annexed drawings set forth in detail certain illustrative aspects and implementations of the invention. These are indicative of only a few of the various ways in which the principles of the invention may be employed.

**BRIEF DESCRIPTION OF THE DRAWINGS**

Fig. 1 is a schematic diagram according to an embodiment of the present invention;
Fig. 2 is a schematic block diagram of a communication layer model;
Fig. 3 is a functional diagram according to an embodiment of the present invention;
Fig. 4 is a functional diagram according to an embodiment of the present invention;
Fig. 5 is a functional diagram according to an embodiment of the present invention;
Fig. 6 is chart diagram according to an embodiment of the present invention;
Fig. 7 shows a flowchart in accordance with one embodiment;
Fig. 8 illustrates a data path of a gamma layer for the ATM-TC layer;
Fig. 9 illustrates a gamma layer of a DTU for the ATM-TC layer;
Fig. 10 illustrates a data path of a gamma layer for the 64/65o-TC layer;
Fig. 11 illustrates a gamma layer of a DTU for the 64/65o-TC layer;
Fig. 12 illustrates a SID translation table for a gamma layer with the ATM-TC layer; and
Fig. 13 illustrates a SID translation table for a gamma layer with the 64/65o-TC layer.

**DETAILED DESCRIPTION**

One or more implementations of the present invention are now described with reference to the attached drawings, wherein like reference numerals are used to refer to like elements throughout. Although examples of retransmission schemes are discussed below in the context of VDSL and ADSL systems, it should be noted that the invention in general is applicable to any communication system.

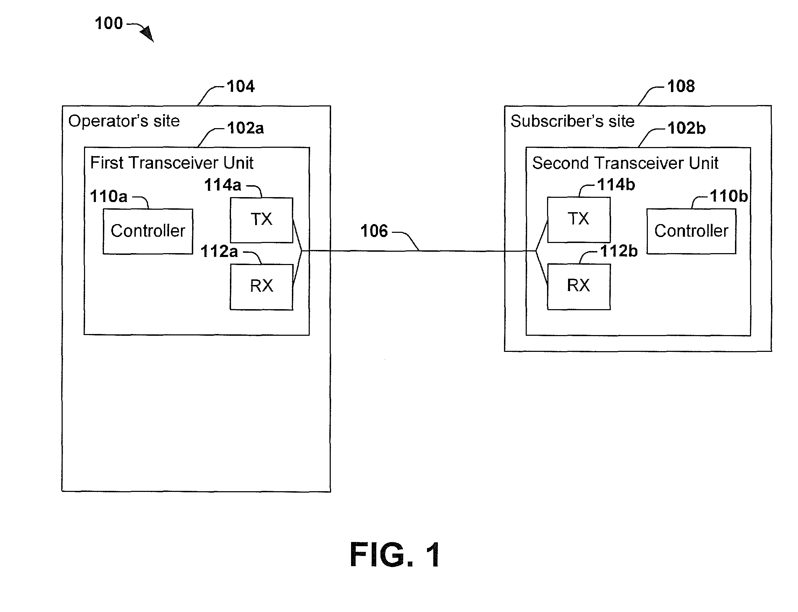

Fig. 1 shows an embodiment of a DSL communication system 100. As is known to a person skilled in the art, the DSL system 100 may be a DMT (discrete multi-tone) system wherein data is modulated on plurality of subcarriers such that each subcarrier is associated with one carrier frequency. The DSL system comprises a first transceiver unit 102a provided at the operators site in an unit 104 such as a central office, a cabinet or other optical network termination units. The first transceiver unit 102a is coupled to a second transceiver unit 102b via a subscriber line 106. The second transceiver unit 102b is integrated in a unit 108 at the subscriber site for example a costumer premise equipment (CPE) such as a modem, router or any other gateway which may also be integrated in other devices such as a personal computer or notebook.

The first transceiver unit 102a includes a first transmitter 112a and a first receiver 114a coupled to the subscriber line 106. The second transceiver unit 102b includes a second transmitter 112b and a second receiver 114b coupled to the subscriber line 106. For coupling of the transmitters and receivers each of the transceiver units may comprise a coupling interface such as hybrid networks etc.

A first controller 110a may be provided to provide controlling and coordination functions for transceiver unit 102a. Furthermore, a second controller 110b may be provided at the subscriber site to provide controlling and coordination functions for transceiver unit 102a.

While Fig. 1 shows the controllers 110a and 110b integrated with a respective one of transceiver units 102a and 102b, it is to be understood that the controllers 110a and 110b may be provided separate from the respective transceiver unit. It is further to be understood that components and entities shown may be implemented in hardware, software, firmware or any combinations thereof.

Furthermore, while Fig. 1 shows only one subscriber line 106 to a remote subscriber, it is to be understood that more than one transceiver unit 102a may be implemented in unit 104. Furthermore, in some embodiments, two or more subscriber lines may be bonded to provide higher data rate to a subscriber.

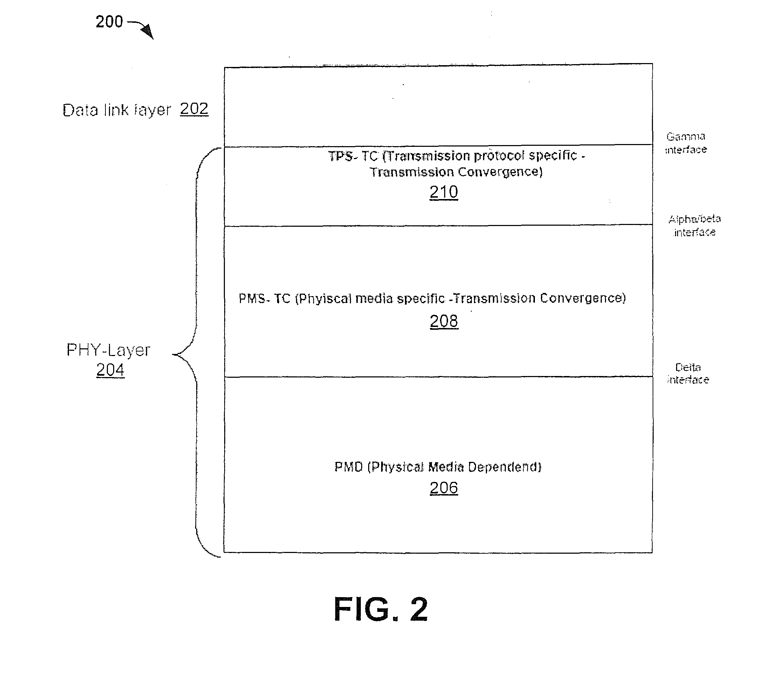

For a better understanding of how DSL systems exchange data, some layers from an illustrative network protocol stack of a VDSL or ADSL system are explained with respect to Fig. 2. Fig. 2 shows the lowest two layers in the OSI model 200, i.e. the PHY layer 202 and the data link layer 204. According to Fig. 2, the PHY layer (first layer in the OSI model) is divided into three layers or PHY-sublayers. The first PHY-sublayer is the PMD (physical media dependant) layer 206, which includes basic functionality such as symbol timing generation and recovery, encoding and decoding, modulation and demodulation, echo cancellation (if implemented) and line equalization, link startup, and physical layer overhead (superframing). Additionally, the PMD layer may generate or receive control messages via an overhead channel.

The next PHY-sublayer is the PMS-TC (physical media specific - transmission convergence) layer 208 which is connected to the PMD layer through the δ interface. The PMS-TC layer 208 is a management plane and provides management primitive indications to management entities in the CO and CPE modems. The PMS-TC layer 208 provides in addition functionality such as generation of frames and synchronization of frames, (de)scrambling, Reed-Solomon coding and interleaving.

The third PHY-sublayer is the TPS-TC (transmission protocol specific-transmission convergence) layer 210 which is connected to the PMS-TC layer 208 through an α-interface (alpha-interface) at the Central Office Site or a β-interface (beta-interface) at the subscriber site. The TPS-TC layer 210 provides functionality such as packetizing into frames, organizing of the bearer channels, multiplexing. The TPS-TC layer 210 is connected to the data link layer 202 (layer 2 in the OSI model) by the γ-interface (gamma-interface).

As data is transmitted over the network stack 200 and subscriber line 106, impulse noise and cross talk noise can adversely affect the transmitted data. This noise tends to corrupt the transmitted data, causing data to be lost and hindering efficient communication. In current xDSL systems like ADSL and VDSL there are several mechanisms like Trellis coding, RS coding and interleaving specified to mitigate the effects of this noise. However, with the increasing popularity of services such as video, (where lost information can cause "flicker" on the video screen), it is desirable to provide a higher level of service quality than achievable with current techniques.

Physical layer retransmission is one technique proposed in this application to increase the quality of video and other similar applications over DSL. Thus, some aspects of the present invention relate to several flavours of retransmission protocols in which erroneous (corrupted) data is re-sent or re-transmitted. These retransmission protocols may be included a retransmission layer inserted into the protocol stack described above. In previous solutions, retransmission modules have been specific to the "Gamma-Layer" and "Alpha Layer" (and, thus, retransmission modules have not interchangeable between these layers). By contrast, in some embodiments of the present invention, retransmission modules are provided that can be flexibly interchanged between different layers in the stack (e.g., between the "Gamma Layer" and the "Alpha Layer.")

Other aspects of the present invention relate to several flavours of retransmission or Automatic Retransmission reQuest (ARQ) protocols. These ARQ protocols, which re-send erroneous (corrupted) data, may be included a retransmission layer inserted into the protocol stack described above. More particularly, some embodiments of the invention propose a combination of "Gamma-Layer Retransmission" and "Alpha Layer Retransmission" schemes, which have previously been located at different sub-layers of the protocol stack.

One embodiment of the invention proposes a retransmission scheme which can be implemented above the physical layer of the DSL system. The invention is based on grouping several data bytes together in to a container and using a sequence ID for this container as a reference for retransmission.

With respect to the network protocol stack 200 of Fig. 2, the retransmission scheme can be implemented between the gamma interface and the alpha/beta interface, or can be implemented between any other interface layers in the OSI stack which is suitable for the implementation. This generic approach is possible because there is no direct relation of the scheme to packets/cells or code words etc. In these retransmission techniques, the data unit contains a byte stream and is not dependent of the completeness of the TC payload. The invention also enables classification of data in to data streams that are eligible for retransmission and not eligible for retransmission. The proposed scheme uses a low mean over head data rate when compared to the state of the art systems, resulting in an overall near optimal retransmission technique.

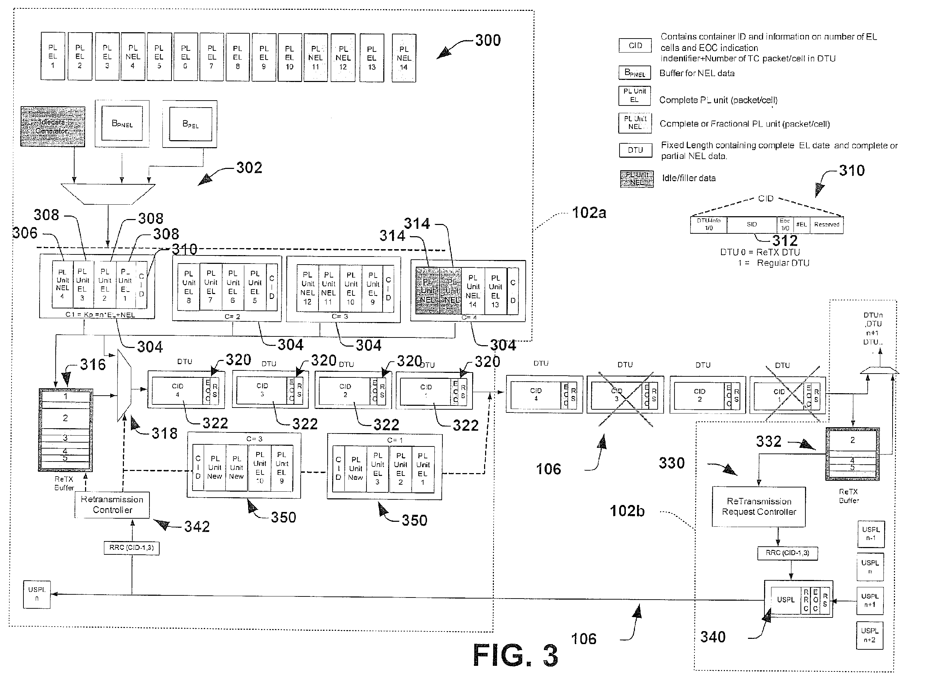

As shown in Fig. 3, a stream of data payload (PL) units 300 is supplied, for example, by the gamma interface of the first transceiver unit 102a (transmitter). Each PL unit may include an Ethernet packet or ATM cell, among types of data unit. Often, each PL unit includes header information that identifies that unit as either non-eligible for retransmission (NEL) or eligible for retransmission (EL). For example, real-time voice data could be classified as NEL because retransmission would result in unacceptable latency (delay) between participants in the conversation. By contrast, video or FTP data could be classified as EL because it could be buffered without causing unacceptable latency.

A container generator 302 receives the data unit stream and groups the byte stream into containers 304. In Fig. 3's illustrated example, each container includes the same number of data units, but in other embodiments the containers can include different numbers of data units so long as the differing lengths are now to both transmitter and receiver. As shown, the container generator 302 may group the data units to generate a container that includes NEL data units 306, EL data units 308, and a unique container identifier (CID) 310. The CID contains a sequence identifier (SID) 312 plus the number of complete PL units (e.g., bytes, cells or packets). If there is not enough data to fill a complete container, the container generator can insert idle data /filler cells 314 to complete a container.

Each container 304 is stored along with its associated embedded overhead channel (EOC) byte in a Retransmission Buffer (Re TX Buffer) 316. The ReTX Buffer stores these containers 304 even after they are transmitted (likely up to some expiration time), thereby enabling retransmission.

A second controller 318 appends redundancy bytes 320 to each DTU to allow for error detection and/or error correction by the receiver. In case of ATM, these redundancy bytes are based on Reed-Solomon (RS)-check bytes; while in case of PTM, these redundancy bytes are based on cyclic redundancy checks (CRC).

After encapsulation is performed, DTUs 322 are transmitted over the subscriber line 106. Noise on the line may corrupt DTUs on the line, as indicated by the "X"s on two of the DTUs.

The second transceiver unit (receiver) 102b then receives the DTUs and uses the redundancy bytes to detect whether errors are present. If possible, the receiver can also use the redundancy bytes to correct these errors. For errors that cannot be corrected, the retransmission request controller 330 analyzes the received data units in the receiver's retransmission buffer 332 and notes which containers need to be retransmitted. For example, in Fig. 3, the containers 1 and 3 are not found in the retransmission buffer 332, and therefore should be retransmitted. The retransmission request controller 330 then sends a retransmission request 340 back to the transmitter 102a indicating which DTUs need to be re-transmitted.

In the illustrated embodiment, the retransmission request 340 can specify the CIDs of the corrupted containers. This information can be included, for example, in the RRC field. In addition, in some embodiments this information can be piggybacked with upstream payload data (USPL) messages that are transmitted to the transmitter 102a, along with the EOC and redundancy information.

Upon receiving the retransmission request 340, the retransmission controller 342 identifies the requested container, which is stored in the retransmission buffer 316. This can be accomplished by the retransmission controller 342 using a look-up table that correlates the containers address in the retransmission buffer with the CID. Notably, the retransmission controller than pulls the EL from the relevant container, and then appends new data (e.g., EL data, NEL data and/or fill data) to the remainder of the retransmitted container. Thus, in Fig. 3's example, container 1 is retransmitted with EL data units 1, 2, and 3 along with a data unit of new data; while container 3 is retransmitted with EL data units 9 and 10 along with two data units of new data.

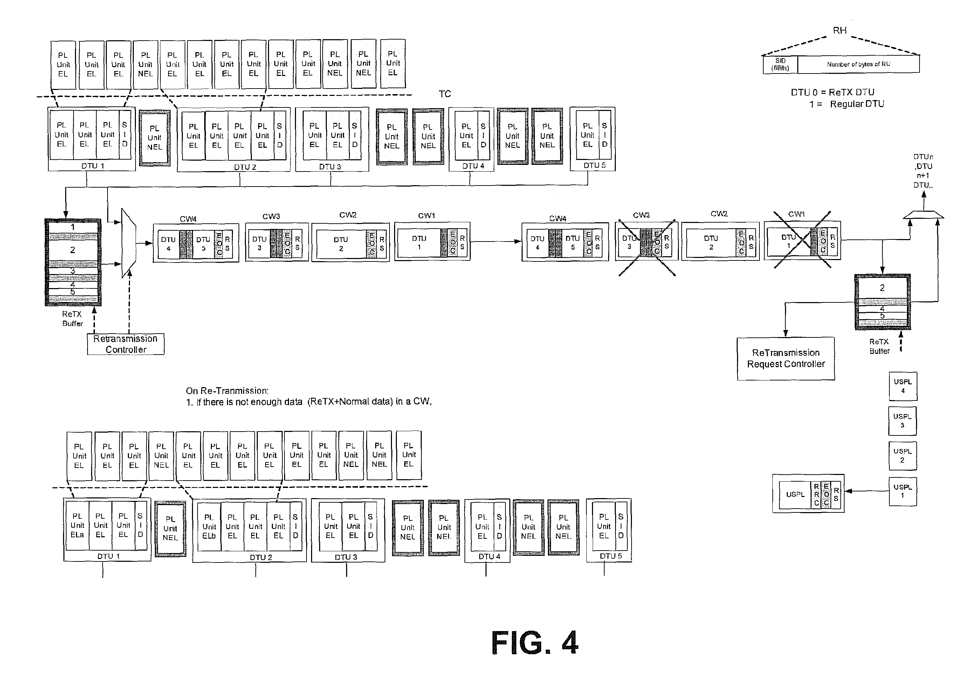

Fig. 4 shows another embodiment, where a simplified retransmission encapsulation is used. In this technique a container is packed with contiguous bytes of EL data up to the container size, and labeled with an SID. If NEL data is encountered before a current container is completely full, the current container is labeled with an SID directly after the last EL data, and then the NEL is packed into a separate container. If uncorrectable data is encountered by the receiver, the receiver in this instance can request containers that include only EL data (i.e., the requested containers do not include NEL data). Therefore, this embodiment provides very low over head retransmission. This means for a very long contiguous packets (e.g., video packets, which are a typical case) only a minimum overhead insertion is required.

One major problem with some existing unified retransmission proposals is that there is no protection for the embedded overhead channel (EOC) data. In some embodiments of the invention, this problem is solved by storing the EOC data so it is associated with a container that includes EL. A mechanism like a look up table can be employed to map the stored EOC data to the container that includes the EL. On receipt of a retransmission request from the receiver, the transmitter checks if the container ID contained EOC data. If there is EOC data associated with the container, then the EOC data is marked and retransmitted to the receiver.

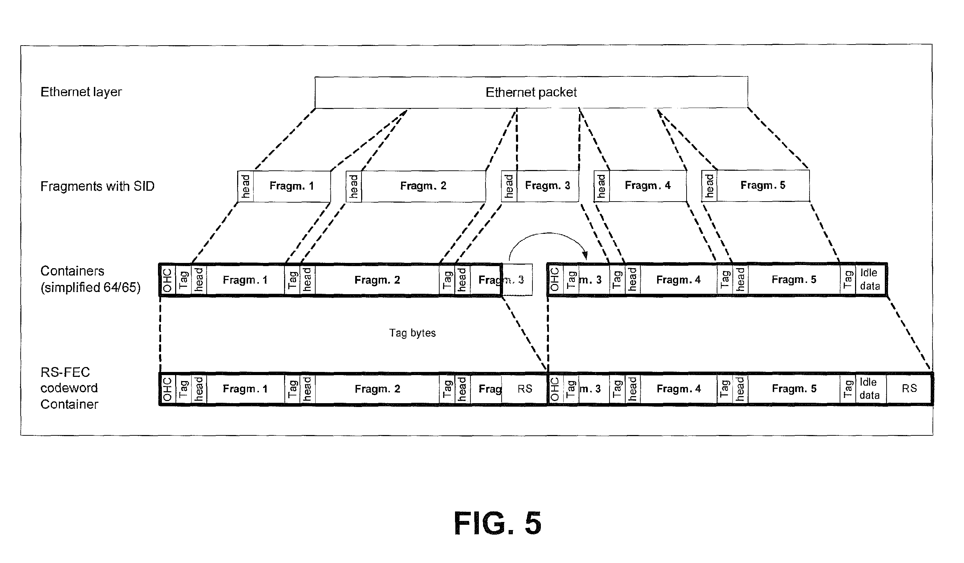

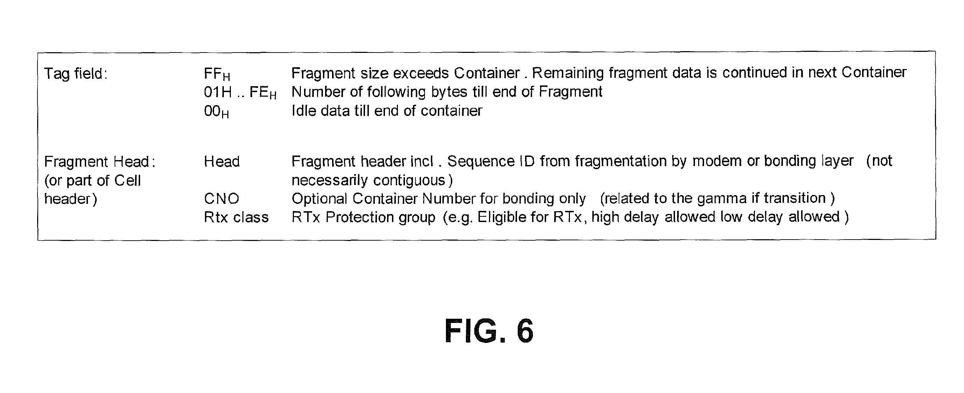

Referring now to Fig. 5, one can see still another embodiment of a retransmission scheme which can be applied for different types of TC layer payload. For purposes of illustration, Fig. 5 shows a retransmission technique using an Ethernet packet as TC pay load. The Ethernet packet is fragmented and encapsulated with a sequence identifier, SID. The fragments are then packed into containers, where a tag field is associated with each fragment to indicate how the fragment boundaries are aligned with respect to the container boundaries. (See Fig. 6 for a more detailed example of information in the tag field.) The tag field can also indicate the alignment of EL data and NEL data within a given fragment or between fragments, or can indicate the alignment of retransmitted data and newly transmitted data within a given fragment or between fragments. An overhead channel field (OHC) is also associated with each container. After the containers are packed, redundancy bytes are then appended to the end of each container and the containers are transmitted over the line to the receiver.

If the receiver encounters uncorrectable data, the receiver can provide the SID corresponding to the uncorrectable data back over the line to the retransmission unit of the transmitter. The retransmission unit can then retransmit the necessary data associated with the SID. Since the transmitter and receiver are synchronized in DSL, there is no necessity to "label" the container and transmit the container label. In all DSL system various counters are maintained for performance monitoring, as long as the transmitter and receiver keep a counter of the codewords there is no need to transfer any label other than the SID.

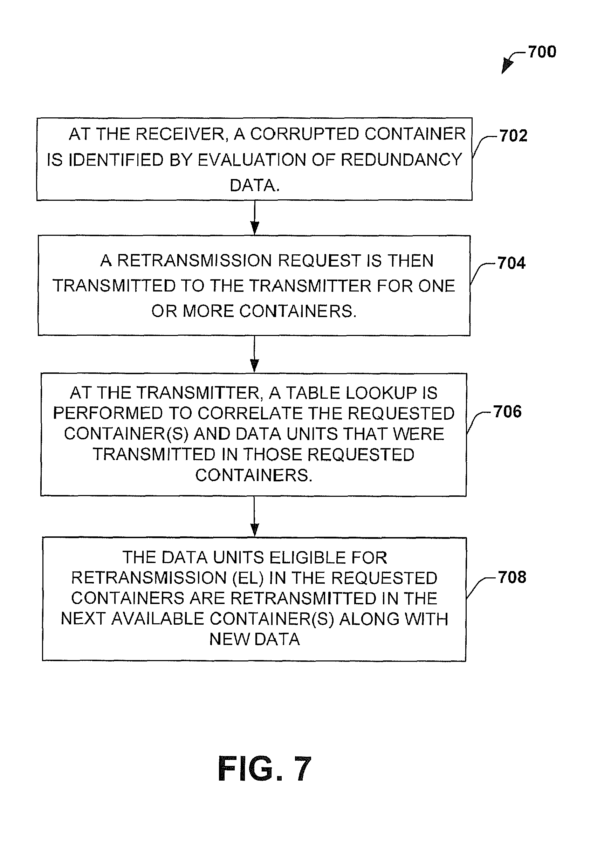

Fig. 7 shows one retransmission scheme and is now briefly discussed. While the method 700 illustrated below is illustrated and described as a series of acts or events, it will be appreciated that the present invention is not limited by the illustrated ordering of such acts or events. For example, some acts may occur in different orders and/or concurrently with other acts or events apart from those illustrated and/or described herein, in accordance with the invention. In addition, not all illustrated acts or events may be required to implement a methodology in accordance with the present invention.

At 702, at the receiver, a corrupted container is identified by RS evaluation. At 704, a retransmission request is then transmitted to the transmitter for one or more containers.

At 706, at the transmitter, a table lookup is performed to correlate the requested container(s) and data units that were transmitted in those requested containers. At 708, the EL data units in the requested containers are retransmitted in the next available container(s).

In one embodiment, the retransmission request channel can be realized with a protocol with fixed number of bytes per symbol requesting the corrupted container. In this case, the receiver needs to request the FEC codeword number of containers per symbol. In other embodiment, the retransmission request channel can be realized with a pre-empted short fragment/cell.

In some embodiments, a container may have the following properties: each container is one or more FEC codeword like Reed-Solomon Codeword

D Known length of the FEC (may be changed by OLR) with block-interleaving or GCI

D Embedding of fragments/cells similar to the 64/65 block (instead of a size of 65 bytes it can be up to 255 bytes, or even more)

D Containers are evaluated for errors (using RS redundancy). Container number is used for identification in retransmission request

D Container number not transmitted in the container. The receiver counts the containers from activation

D Possibility to do "Container repetition" instead of "frame blanking", thereby temporarily stopping or limiting transmission during intervals in which repetitive electrical impulse noise (REIN) occurs.

■ Fragment/Cell function

D Contains an SID for re-ordering - does not need to be contiguous so bonding fragments can be used

D Field to identify membership to the class of protection (service specific)

D No CRC needed due to RS of Container

D The fragment/cell is the actual retransmission unit. On RTX request a new Container is assembled depending on capacity and on the protection class of fragments in the requested container.

D Retransmitted fragments/cells can optionally contain the original container number to equalize the bonding delay.

In one embodiment, the data eligible for retransmission contains unique container IDs and the non retransmission data eligible data container contains the ID of the previous eligible container. Along with the retransmission eligibility information and the unique sequence ID for data unit, the retransmission system can identify the corrupted data using error detection / correction technique and if the data that is corrupted belongs to the eligible data stream.

One advantage with the scheme is that only the eligible stream carries unique IDs and non eligible data carries the ID of the eligible container. So, if a non eligible data container is lost, the receiver will not even request the lost data because there must have been an earlier container received successfully with eligible data.

Thus, the proposed embodiment is a very flexible retransmission scheme that does not limit the size of the data unit. The retransmission scheme uses "just enough" overhead when needed, because only the eligible data is encapsulated. It may be argued that the above property can lead to additional overhead whenever there a mix of eligible and non eligible data, but from the application and practical scenarios this is seldom the case, because the eligible data like video are usually contiguous long data packets.

By not transmitting the container number from transmitter to receiver, the overhead necessary for a typical retransmission scheme is reduced in some embodiments. This is possible because the DMT system is a symbol synchronous system where container information is available and synchronized at both transmitter and receiver.

In some embodiments, the invention does not restrict the data unit and the container to have one to one mapping.

In some embodiments, the invention allows decoupling of the TC layer data size (data units) and the physical layer data size (container) and can accommodate varying data unit sizes and varying number of data units per container.

Some embodiments of the proposed invention can be applied for cases where TC layer bonding is used, for example ATM, PTM etc.

In some embodiments, the invention can be applied to any system with a known frame structure to reduce the overhead for the retransmission scheme. For example, by using the DMT symbol as reference points instead of using containers (RS codewords) the overhead can be reduced. If there are multiple code words in a DMT symbol, the number of retransmission request bytes are also reduced.

In some embodiments, the contents of the containers may be unique, i.e. the container itself is transmitted only once and never retransmitted, but the eligible content of the container is retransmitted on request in a new container.

In some embodiments, this invention describes a system where information is conveyed from one modem to the other identifying the corrupt information, and the transmitting modem, based on the corrupt information the transmitter identifies the container associated with data unit and request retransmission of the data unit by sending necessary information, example container number. Based on the retransmission request information, the transmitter identifies the data units that are requested using a look up table that contains the correlation information of the data unit and the container.

Several types of data units can be used for retransmission eligibility classification, examples include, but are not limited to: application type, eligible under certain external conditions, (e.g., noise); never eligible; always eligible; and/or eligible for retransmission for a time window. The eligibility criterion for classes of data associated with the retransmission can be changed dynamically based on external criterions like, noise characteristics.

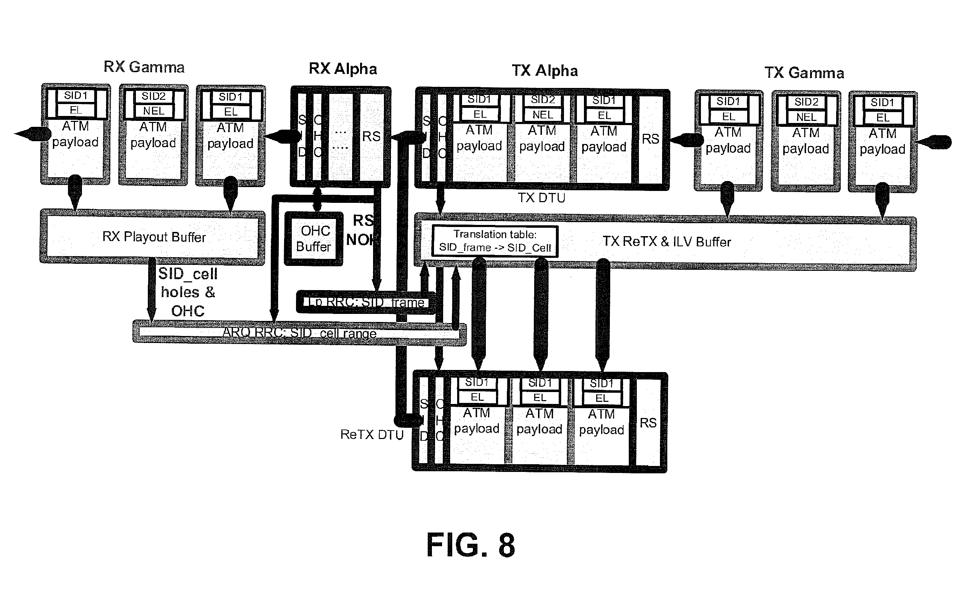

Fig. 8 illustrates a gamma layer data path for the ATM-TC layer. More particularly, Fig. 8 illustrates transmission schemes for normal transmission TX, normal transmission RX, retransmission TX, and retransmission RX.

Referring to Fig. 8, a normal transmission TX scheme works according to the following acts as illustrated in Fig. 8.

ATM cells from the system interface are classified into eligible and non eligible for retransmission.

The gamma+ retransmission function inserts an individual SID_cell1 into ATM cells eligible for retransmission and SID_cell2 into ATM cells non-eligible for retransmission.

Only ATM-cells eligible for retransmission are stored in the TX retransmission buffer.

All ATM cells are forwarded to the modified TPS-TC and then to the PMS-TC.

The PMS-TC builds mux data frames (MDF) by adding the sync byte in the usual way.

The overhead channel bytes are stored in the TX retransmission buffer In case of issues with SID_frame insertion, the PMS-TC scrambler may be switched off in certain embodiments.


PMS-TC appends SID_frame to Mp × MDF.


The gamma+ DTU is defined by $Dp \times (Mp \times MDF + SID\_frame)$.

The gamma+ retransmission function keeps track of the correlation between gamma+ DTUs including the overhead bytes identified by SID_frame and ATM cells eligible for retransmission identified by SID_cell1 (e.g. by maintaining a SID translation table). In order to achieve an unambiguous correlation, the receiver can take into account additional constraints in the framing parameter generation.

The codeword is forwarded to the Reed-Solomon encoder as usual, which adds an amount of RS checkbytes for error detection with sufficiently low misdetection probability.

Block interleaving could also be used in some implementations.

Referring again to Fig. 8, a normal transmission RX scheme works according to the following acts as illustrated in Fig. 8.

The Reed-Solomon decoder checks whether the received RS codeword is correct or in error. This information has to be forwarded to the OHC playout buffer handling and to the 'eligible cells' playout buffer handling.

If RS codewords are received in error, the receiver requests the corresponding range of corrupted gamma+ DTUs [last valid_SID_frame; first valid_SID_frame] from the transmitter. It will be appreciated that details of the retransmission request policy are more complex, but not expected to influence the basic feasibility.

The PMS-TC forwards OHC bytes to the OHC playout buffer.

The RS codewords are forwarded to the ATM-TC for delineation. The retransmission function drops cells that are expected (The amount of cells expected to be in error is larger than the amount of cells contained in corrupt codewords due to the PMS-TC scrambler) to be in error based on the Reed-Solomon check.

Cells non-eligible for retransmission are immediately forwarded to the higher layer, while cells eligible for retransmission are forwarded to the playout buffer

A retransmission TX scheme works according to the following acts as illustrated in Fig. 8.

When the receiver requests a range of corrupted gamma+ DTUs [last valid_SID_frame; first valid_SID_frame], the transmitter has to identify the corresponding cells eligible for retransmission and the corresponding overhead bytes (e.g. by searching the corresponding range of SID_cell1 in the SID translation table). The cells in the range of [last_valid_SID_cell1; first_valid_SID_cell1] are fetched from the retransmission buffer and forwarded to the ATM-TC. Also the corresponding overhead bytes are fetched from the retransmission buffer and inserted into the mux data frames.

The PMS-TC appends SID_frame to the $Mp \times MDF$ with retransmitted cells and overhead bytes. That is in detail, that the retransmitted DTU is newly-made and not necessarily identical to the DTU that was corrupted. In certain embodiments it may happen, that the amount of to be retransmitted cells does not fit into an integer amount of DTUs. In this case, the remaining cells may be filled with either Idle cells or new cells from the system interface.

The retransmission DTU is forwarded to the Reed-Solomon encoder, which generates new RS checkbytes.

A retransmission RX scheme works according to the following acts as illustrated in Fig. 8.

The retransmitted DTU is processed in the same way as a normal DTU.

The extracted OHC bytes are forwarded to the OHC playout buffer.

The OHC playout buffer inserts them into the message at the appropriate positions

As soon as all bytes of an OHC message have been received correctly, the entire message is forwarded to the Controller / DSP.

The retransmitted cells are forwarded to the playout buffer.

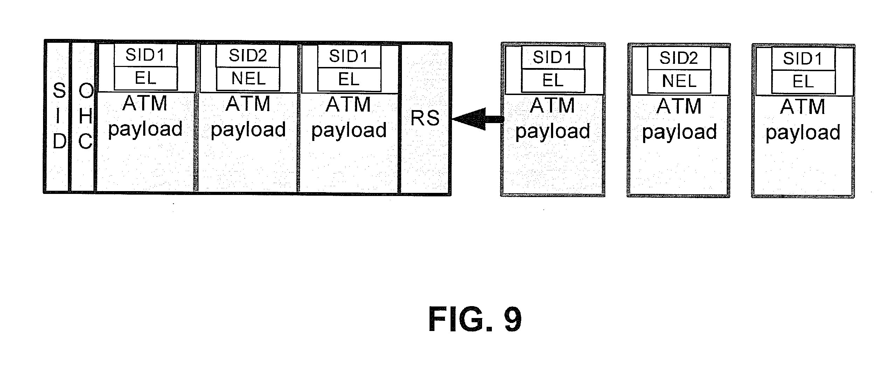

Fig. 9 illustrates the gamma layer with DTU for the ATM-TC layer. As shown in Fig. 9, if the RS codeword contains an integer amount of ATM cells, the DTUs of alpha and gamma retransmission become similar:

In general, the gamma+ DTU is constructed by $Dp \times (Mp \times Kp + SID\_frame)$ (In case of block interleaving, the parameter Dp is equal to the interleaver depth. Without interleaving or in case of convolutional interleaving, Dp is an independent parameter). The generalized restriction on framing parameters is then that $Dp \times (Mp \times Kp + SID\_frame)$ can contain an integer amount of ATM cells. This is the basic idea for combining retransmission at alpha and gamma.

The impact of the restrictions on RS codeword size Nfec and other related framing parameter (e.g. on Tp and Dp) is described in the section on framing parameter generation.

The gamma+ DTU for ATM-TC contains two independent types of SIDs, that are similar to alpha (SID_frame) and gamma for ATM-TC (SID_cell), respectively:

The first independent type of SID is SID_cell. SID_cell is inserted into the ATM cell header.

That is especially that the SID_cell1 is continuously incrementing for cells eligible for retransmission.

The second independent type of SID is SID_frame. SID_frame is appended to $Mp \times Kp$. SID_frame increments with every new transmitted DTU. In some embodiments, wherein DTUs are retransmitted the handling of SID_frame is incremented continuously.

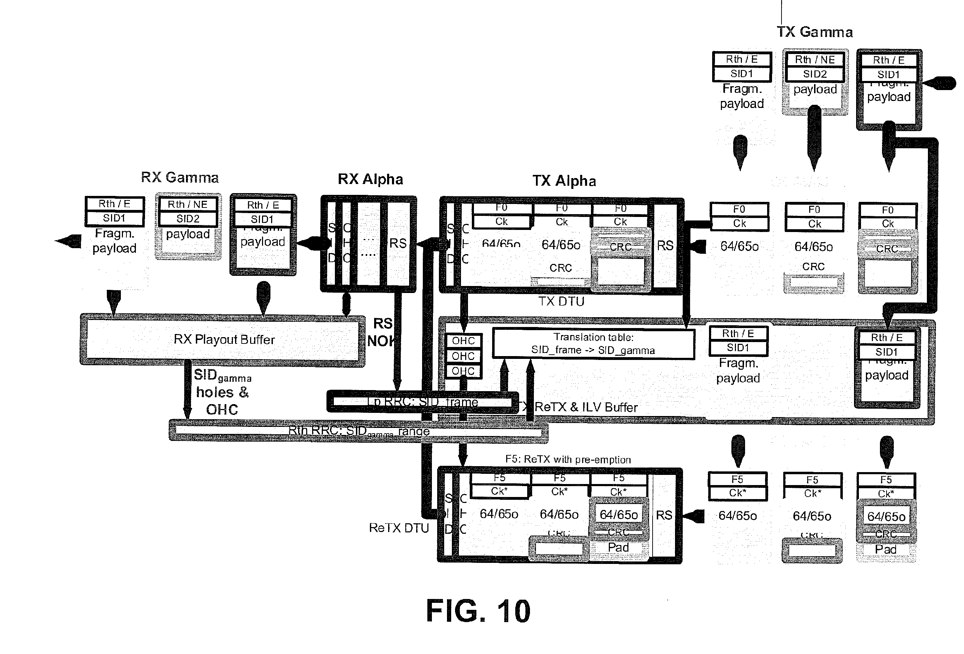

Fig. 10 illustrates a gamma layer data path for the 64/65o-TC layer. More particularly, Fig. 10 illustrates transmission schemes for normal transmission TX, normal transmission RX, retransmission TX, and retransmission RX over the 64/65o-TC layer. The gamma+ data path for 64/65o-TC is similar to the data path for ATM-TC. Major difference is the variable length of fragments, that requires to maintain fragment delineation boundaries.

Referring to Fig. 10, a normal transmission TX scheme works according to the following acts as illustrated in Fig. 10.

Packets from the system interface are classified into eligible and non-eligible for retransmission.

The gamma+ retransmission performs fragmentation of packets according to the PAF fragmentation function (ITU-T G.998.2).

The gamma+ retransmission function appends an individual SID_fragm1 to fragments eligible for retransmission and SID_cell2 to fragments non-eligible for retransmission.

Only fragments eligible for retransmission are stored in the TX retransmission buffer.

All fragments are forwarded to the modified 64/65o-TC

The retransmission function keeps track of fragment boundaries in 65o words by monitoring the 64/65o-TC control bytes, especially Ck. This information can be maintained in the SID translation table to correlate DTUs in error with corrupted fragments eligible for retransmission.

The following processing is identical to gamma+ for ATM-TC illustrated above.

Referring again to Fig. 10, a normal transmission RX scheme works according to the following acts as illustrated in Fig. 10.

The Reed-Solomon decoder checks whether the received RS codeword is correct or in error. This information has to be forwarded to the OHC playout buffer handling and to the 'eligible cells' playout buffer handling.

If RS codewords are received in error, the receiver requests the corresponding range of corrupted gamma+ DTUs [last valid_SID_frame; first valid_SID_frame] from the transmitter. It will be appreciated that details of the retransmission request policy are more complex, but not expected to influence the basic feasibility.

The PMS-TC forwards OHC bytes to the OHC playout buffer.

The RS codewords are forwarded to the 64/65o-TC for delineation.

The 64/65o-TC drops all fragments with CRC-16 (32) in error (within the misdetection probability of 2^16/2^A32). Since fragments are not aligned to 65o words, the first fragment and the last fragment may belong to the range of corrupted codewords only partially. These partially corrupted fragments will be also dropped due to CRC check and have to be retransmitted.

The retransmission function may implement an additional drop for all fragments that are expected to be in error based on the Reed-Solomon check, optional.

Fragments non-eligible for retransmission are immediately forwarded to the higher layer, while fragments eligible for retransmission are forwarded to the playout buffer.

A retransmission TX scheme works according to the following acts as illustrated in Fig. 10.

When the receiver requests a range of corrupted gamma+ DTUs [last valid_SID_frame; first valid_SID_frame], the transmitter has to identify the corresponding fragments eligible for retransmission and the corresponding overhead bytes (e.g. by searching the corresponding range of SID_fragm1 in the SID translation table)

Fragments that are only partially belonging to corrupted DTUs have to be retransmitted as well.

The fragments in the range of [last_valid_SID_cell1; first_valid_SID_cell1] are fetched from the retransmission buffer and forwarded to the 64/65o-TC.In order to accelerate retransmission, an ongoing transmission of a fragment may be pre-empted. Since fragments are sent again to the 64/65o-TC, the delineation of retransmitted fragments is different to the delineation in the first transmission. Therefore, Ck* bytes will be in general different to Ck and can be updated in the SID translation table.

The following processing is identical to gamma+ for ATM-TC.

Referring again to Fig. 10, a retransmission RX scheme works according to the following acts as illustrated in Fig. 10.

The retransmitted DTU is processed in the same way as a normal DTU.

The extracted OHC bytes are forwarded to the OHC playout buffer as in gamma+ for ATM-TC

The retransmitted fragments are forwarded to the playout buffer.

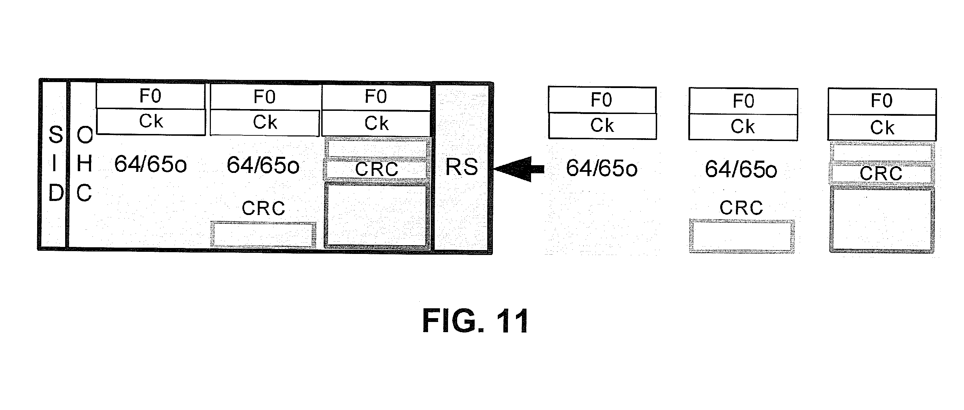

Fig. 11 illustrates the gamma layer with DTU for the 64/65o layer. In analogy to the integer relation between ATM cells and RS codewords in case of ATM-TC, the gamma+ DTU can contain an integer amount of 65octet words in case of 64/65o-TC. It will be appreciated that fragment boundaries need not be aligned to 65o words or to RS codewords.

The gamma+ DTU for 64/65o-TC contains two independent types of SIDs, that are similar to alpha (SID_frame) and gamma for 64/65o-TC (SID_fragm), respectively:

The first independent type of SID Is SID_fragm. SID_fragm is appended to each fragment.
The second independent type of SID is SID_frame. SID_frame is appended to $Mp \times MDF$ octets. SID_frame increments with every new transmitted DTU. In one embodiment, the SID_frame is increment continuously in the case of retransmitted DTUs.

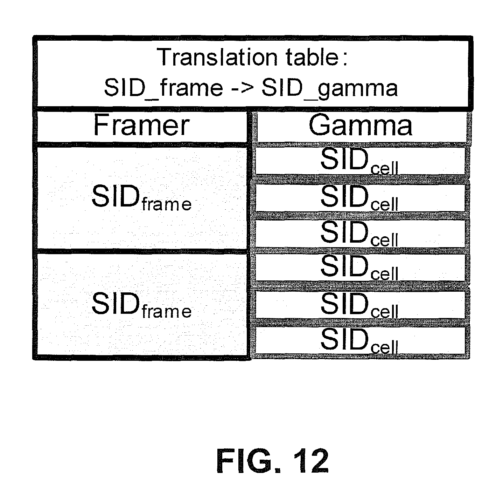

Fig. 12 illustrates a SID Translation Table for Gamma layer with ATM-TC. Due to the restriction of framing parameters to values, that an integer amount m of ATM cells is contained in a gamma+ DTU, the correlation between SID_frame and SID_cell is unambiguous.

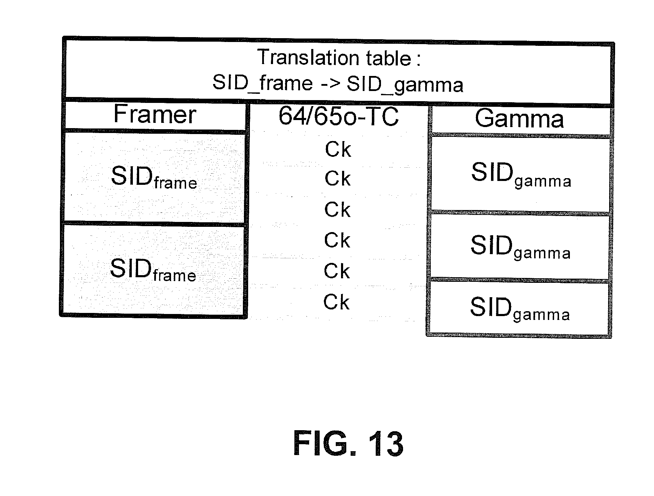

Fig. 13 illustrates a SID Translation Table for Gamma layer with 64/65o-TC. Due to the variable length of fragments, the correlation between SID_frame and SID_fragm is not unambiguous. The alignment of fragment boundaries is maintained by the 64/65o-TC with the Ck byte. A similar correlation as in ATM-TC may be constructed by storing the Ck byte in the SID translation table. The restriction of framing parameters to values, that an integer amount n of 65o words is contained in a gamma+ DTU, ensures an unambiguous correlation between SID_frame and $n \times Ck$.

If a range of SID_frame [SID_frame_start; SID_frame_end] is requested for retransmission, a fragment eligible for retransmission may be mapped only partially to the first or last codeword. Such fragments can be treated as if they belong completely to the corresponding SID_frame.

In order to detect a gamma+ DTU in error, the Reed-Solomon decoder can be used as detector for both ATM-TC and 64/65o-TC.

### OHC Replacement in case of γ-ReTx

The PMS-TC OAM channel or in DSL terms simply spoken overhead channel OHC is not impulse noise protected by ReTx in case of γ-ReTx. A simple solution with OHC-INP can be as follows.

1.) CRC-8 is calculated over (SEQ-1) bytes as mentioned in gamma+ spec, i.e. only over the overhead channel bytes, exclusive FEC framer packetized TPS-TC data.

**Table 7-14/G.992,3 - Overhead channel structure depending on $SEQ_p$**

| Octet number | Information | $SEQ_p$ length |
|---|---|---|
| **Case if p MSG and latency path #p is not the lowest latency path according to the definition in this clause** | | 2 |
| 0 | CRC octet | |
| 1 | Reserve for use by ITU-T. This octet shall be set to $FF_{10}$ in all lstaney paths | |
| **Case if $_p MSG_{lp}$ and latency path is the lowest latency path** | | 6 |
| 0 | CRC octet | |
| 1,2,3,4 | Bit-oriented portion of overhead channel | |
| 5 | Reserved for sis by ITU-T This octet shall be set to $FP_k$ is all latency path | |
| **Case if $p** MSG_{LP}$ and latency path is not the lowest latency path according to the definition in this clause** | | $MSG_c + 2$ |
| 0 | CRC octet | |
| 1 | Reserved for use by ITU-T .This octet shall be set to $FF_{10}$ is all latency path | |
| 2, 3, | Message-oriented portion of overhead channel MSG | |
| **Case if $p - MSG_{LP}$ and latency path #p is the lowest latency path according to the definition in this clause** | | $MSG_c + 6$ |
| 0 | RC octet | |
| 1,2,3, 4 | Bit-cricated portion of overhead channel | |
| 5 | Reserved for use by ITU-T This octet shall the set to $FP_{16}$ is all latency paths. | |
| 6,7,... $MSG_c$ +5- | Message oriented portion of overhead channel | |

2.) MSGc can be limited in the training session to MaxMSGc = 42 which means that the overhead channel rate OR is limited to 48*8/0.020 = 19.2 Kbit/s and the message based overhead channel rate MSG is limited to 42*8/0.020 = 16.8 Kbit/s which should be sufficient since the recommendation value is MSGmin = 6 kbit/s. So the G.PLOAM parameter MSGmin can be limited to a maximum value of 16 kbit/s.

3.) A PMS-TC OAM container can be build by the transmitter side every PER (overhead channel period) with SEQ bytes where the first byte is the first byte of the bit-oriented portion of overhead channel and the last byte is the CRC-8 over the container content.

4.) Whenever a new CRC-8 is calculated this container will be appended with dummy bytes for getting a 48-byte chunk which will be then mapped as ATM cell payload in an ATM cell with VPI/VCI of the ReTx-protected stream, CLP=1, PTI=001b and is inserted at the $\gamma_c$-interface before the SID mapping takes place. CLP=0 can be the signature for the normal stream (IPTV) protected by ReTx and CLP=1 with PTI=001b can be the signature for the OAM stream protected by ReTx. If no service discrimination is done for ReTx and therefore no VPI/VCI of the ReTx-protected stream exists it can be taken VPI/VCI=0 (this is not an idle cell since PTI is not 000b, this is then an F1 OAM cell).

5.) The receiver will not evaluate PMS-TC OHC info got from the FEC frame. Instead, it will evaluate the info got from the extracted cells with [PTI, CLP] = 0011 b. Extraction is done after re-ordering, i.e. after the ReTx playout buffer. Both sides, far-end and near-end, know the value of MSGc since it is communicated during training from ATU-R to ATU-C and therefore, both sides know the real container size which is (MSGc+6) bytes in case of single latency Alternative RRC at Delta Interface

**<u>Alternative RRC at the delta interface (an example not to be limiting)</u>**

1.) 24 bits of Lp at the delta interface are used to realize an RRC with 96 kbit/s CBR as it is the case for the alpha-ReTx RRC.

2.) A NACK based message protocol can be used (ARQ class with Selective Repeat, see also http://de.wikipedia.org/wiki/ARQ-Protokoll).

3.) The ATM based ARQ request format can be re-used, i.e. the NACK based message contains the raw ARQ cell info consisting of ARQ cell payload minus dummy bytes minus CRC-32.

4.) The NACK based message will be HDLC encapsulated. All RRC data can be HDLC encapsulated in the same way as it is specified for the message based portion of the PMS-TC overhead channel.

5.) RRC can be seen as a latency path with following attributes:
Lp = 24;
Dp = 1;
Mp = 1;
Bp = 2;
Rp=0;
Tp = infinity;
disabled PMS-TC scrambler;

Two types of retransmission layer are described in this proposal, one being the data unit which is normally referenced to gamma layer and another layer being container which is normally referenced with alpha layer.

Some embodiments relate to a system capable of receiving retransmission request in both alpha and gamma layer and sending the requested data to the far end receiver in the same or a different layer.

Some embodiments relate to a transmitter containing the correlation information between the data units and the container.

Some embodiments relate to correlation information between the data units on one layer, for example gamma interface and the container on another layer, for example at alpha interface is exploited to enable retransmission at any layer regardless of the retransmission implementation layer on the other modem. For example can be used to maintain the correlation information.

Some embodiments relate to a retransmission scheme, where the corrupted data is identified by an error detection mechanism and the retransmission request is associated with a data unit. The retransmission request can be made using a data unit identifier.

Some embodiments relate to a transmitter that uses the correlation information between the data transfer unit and container to select the appropriate eligible data units for retransmission.

Some embodiments relate to a transmitter containing the correlation information between the data units and the container.

Some embodiments relate to correlation information between the data units on one layer, for example gamma interface and the container on another layer, for example at alpha interface is exploited to enable retransmission at any layer regardless of the retransmission implementation layer on the other modem.

Some embodiments relate to a retransmission scheme, where the corrupted data is identified by an error detection mechanism and the retransmission request is associated with a container unit. The retransmission request can be made using a container unit identifier.

Some embodiments relate to a transmitter that uses the correlation information between the data transfer unit and container to select the appropriate eligible data units for retransmission.

Some embodiments relate to a system capable of receiving retransmission request in both alpha and gamma layer and sending the requested data to the far end receiver in the same or a different layer.

Although the invention has been illustrated and described with respect to one or more implementations, alterations and/or modifications may be made to the illustrated examples without departing from the spirit and scope of the appended claims. In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations of the invention. In addition, while a particular feature of the invention may have been disclosed with respect to only one of several implementations, such feature may be combined with one or more other features of the other implementations as may be desired and advantageous for any given or particular application. Furthermore, to the extent that the terms "including", "includes", "having", "has", "with", or variants thereof are used in either the detailed description and the claims, such terms are intended to be inclusive in a manner similar to the term "comprising".

## Claims

1. A method of communicating data between a transmitter and receiver of a communication system, comprising:

   receiving data as a series of data units respectively associated with container numbers from over a transmission medium at the receiver;
   identifying whether the received data includes an uncorrectable data unit;
   if an uncorrectable data unit is detected, identifying a container number associated with the data unit; and
   transmitting a request for retransmission of the data unit by sending information indicative of the container number associated with the uncorrectable data unit.

2. The method of claim 1, further comprising:

   based on the request for retransmission, identifying the requested data units at the transmitter by using a look up table that contains the correlation information of the data unit and the container.

3. The method of claim 1 or 2, further comprising:

   retransmitting the requested data units in a retransmitted container, where the retransmitted container include data units eligible for retransmission from the original container as well as new data units.

4. The method of any one of claims 1 to 3, wherein after the request for retransmission is transmitted, the method further comprises:

   receiving the requested data units in a retransmitted container, where the retransmitted container include data units eligible for retransmission from the original container as well as new data units.

5. A method of transmitting data over a communication system, comprising:

   providing a retransmission scheme for retransmitting uncorrectable data, where the retransmission scheme that utilizes information that correlates data unit boundaries at a first network stack layer with container boundaries at a second network stack layer.

6. The method of claim 5, where the second network stack layer is a delta interface of a physical layer.

7. The method of claim 5 or 6, where the first network stack layer is a gamma interface layer of a data link layer.

8. A communication system, comprising:

   transmitting means for transmitting data transmission units over a transmission medium, the data transmission units including one or more containers with respective container identifiers, and the containers including data units eligbile for retransmission and data units in-eligible for retransmission;
receiving means for receiving the data transmission units and for transmitting a retransmission request that specifies uncorrectable data received in at least one of the containers.

**9.** The communication system of claim 8, wherein the transmitting means comprises:

means for correlating the retransmission request with the transmitted data transmission units; and
means for retransmitting the requested data transmission units to include the prevously transmitted data units eligible for retransmission along with new data units.

**10.** A transmitter, comprising:

a first network stack layer on which a stream of data units is provided, a data unit comprising:

a sequence identifier (SID),
eligibility information indicating whether the data unit is suitable for retransmission, and
payload data;

a second network stack layer adapted to receive the stream of data units from the first network stack layer, the second network stack layer adapted to arrange the data units into one or more containers, a container including a container identifier that identifies a series of data units in the container.

**11.** The transmitter of claim 10, further comprising:

a translation table adapted to correlate the container identifier to the sequence identifiers of the data units within the series.

**12.** The transmitter of claim 10 or 11, where the transmitter is adapted to transmit the containers over a transmission medium.

**13.** The transmitter of any one of claims 10 to 12, where the transmitter is further configured to respond to retransmission requests from a receiver, the retransmission requests identifying uncorrectable data to be retransmitted by the transmitter.

**14.** The transmitter of claim 13, where in some retransmission requests the uncorrectable data is identified by a container identifier of data units associated with the uncorrectable data and in other retransmission requests uncorrectable data is identified by sequence identifiers of data units associated with uncorrectable data.

**15.** The transmitter of any one of claims 10 to 14, where the first network stack layer is a gamma interface layer of a data link layer.

**16.** The transmitter of any one of claims 10 to 15, where the second network stack layer is a delta interface of a physical layer.

**17.** A communication system, comprising:

a transmitter as defined in any one of claims 10 to 16; and
a receiver adapted to receive transmitted containers and determine whether the received containers include uncorrectable data.

**18.** The communication system of claim 17, where the receiver is further configured to transmit a retransmission request in which the uncorrectable data is identified by the sequence identifiers of the data units associated with the uncorrectable data.

**19.** The communication system of claim 17 or 18, where the receiver is further configured to transmit a retransmission request in which the uncorrectable data is identified by the container identifier of the data units associated with the uncorrectable data.

**FIG. 1**

EP 2 045 951 A2

Data link layer <u>202</u>

EP 2 045 951 A2

Gamma
interface

TPS- TC (Transmission protocol specific -
Transmission Convergence)

<u>210</u>

Alpha/beta
interface

PHY-Layer
<u>204</u>

PMS- TC (Phyiscal media specific -Transmission Convergence)

<u>208</u>

Delta
interface

PMD (Physical Media Dependend)

<u>206</u>

# FIG. 2

FIG. 3

EP 2 045 951 A2

FIG. 4

FIG. 5

| Tag field: | FF$_H$ | Fragment size exceeds Container . Remaining fragment data is continued in next Container |
| | 01H .. FE$_H$ | Number of following bytes till end of Fragment |
| | 00$_H$ | Idle data till end of container |
| | | |
| Fragment Head: | Head | Fragment header incl . Sequence ID from fragmentation by modem or bonding layer (not |
| (or part of Cell | | necessarily contiguous ) |
| header) | CNO | Optional Container Number for bonding only (related to the gamma if transition ) |
| | Rtx class | RTx Protection group (e.g. Eligible for RTx, high delay allowed low delay allowed ) |

# FIG. 6

EP 2 045 951 A2

```
                                                              ┌─700
```

| | |
|---|---|
| AT THE RECEIVER, A CORRUPTED CONTAINER IS IDENTIFIED BY EVALUATION OF REDUNDANCY DATA. | 702 |
| A RETRANSMISSION REQUEST IS THEN TRANSMITTED TO THE TRANSMITTER FOR ONE OR MORE CONTAINERS. | 704 |
| AT THE TRANSMITTER, A TABLE LOOKUP IS PERFORMED TO CORRELATE THE REQUESTED CONTAINER(S) AND DATA UNITS THAT WERE TRANSMITTED IN THOSE REQUESTED CONTAINERS. | 706 |
| THE DATA UNITS ELIGIBLE FOR RETRANSMISSION (EL) IN THE REQUESTED CONTAINERS ARE RETRANSMITTED IN THE NEXT AVAILABLE CONTAINER(S) ALONG WITH NEW DATA | 708 |

# FIG. 7

FIG. 8

FIG. 9

**FIG. 10**

FIG. 11

| Translation table : SID_frame -> SID_gamma | |
|---|---|
| Framer | Gamma |
| | $SID_{cell}$ |
| $SID_{frame}$ | $SID_{cell}$ |
| | $SID_{cell}$ |
| | $SID_{cell}$ |
| $SID_{frame}$ | $SID_{cell}$ |
| | $SID_{cell}$ |

FIG. 12

| Translation table :<br>SID_frame -> SID_gamma | | |
|---|---|---|
| Framer | 64/65o-TC | Gamma |
| $SID_{frame}$ | Ck<br>Ck<br>Ck | $SID_{gamma}$ |
| $SID_{frame}$ | Ck<br>Ck<br>Ck | $SID_{gamma}$ |
| | | $SID_{gamma}$ |

**FIG. 13**